Europäisches Patentamt

(19) European Patent Office

Office européen des brevets

(11) Publication number: **0 058 171 B1**

## (12) EUROPEAN PATENT SPECIFICATION

(45) Date of publication of patent specification: 29.05.85

(51) Int. Cl.⁴: **C 08 F 8/22**

(21) Application number: 81902197.3

(22) Date of filing: 31.07.81

(86) International application number:
PCT/US81/01027

(87) International publication number:
WO 82/00647 04.03.82 Gazette 82/07

(54) **PROCESS FOR CHLORINATION OF PVC IN WATER WITHOUT USE OF SWELLING AGENTS.**

(30) Priority: 26.08.80 US 181521

(43) Date of publication of application:
25.08.82 Bulletin 82/34

(45) Publication of the grant of the patent:
29.05.85 Bulletin 85/22

(84) Designated Contracting States:
CH DE FR GB LI NL SE

(56) References cited:
GB-A-1 186 847
GB-A-1 202 229
GB-A-1 378 364
US-A-3 100 762
US-A-3 506 637
US-A-3 534 013
US-A-3 632 848
US-A-4 049 517

CHEMICAL ABSTRACTS, vol. 70, no. 18, May 5,
1969, page 18, no. 78571b COLUMBUS, OHIO
(US) T. WAKABAYASHI et al.:"Chlorination of
Polymers"

(73) Proprietor: **The B.F. GOODRICH Company
Dept. 0015 WHB-6 500 South Main Street
Akron, Ohio 44318 (US)**

(72) Inventor: **OLSON, Alan James
2050 Berkeley Drive
Westlake, OH44145 (US)**
Inventor: **VIELHABER, Robert Gerard
98 Homan Drive
Doylestown, OH 44230 (US)**

(74) Representative: **von Kreisler, Alek, Dipl.-Chem.
et al
Deichmannhaus am Hauptbahnhof
D-5000 Köln 1 (DE)**

Courier Press, Leamington Spa, England.

## Description

### Background of the invention

Over the past decade, chlorinated poly(vinyl chloride) resin (hereafter "CPVC" for brevity), has moved into the vanguard of vinyl chloride resins because of its unique suitability for rigid and semi-rigid compositions used in extruded pipe, cable jacketing and structural components for buildings. The chlorination of various types of poly(vinyl chloride) resins (hereafter "PVC" for brevity) by different methods is disclosed in the textbooks "Polyvinylchloride and Vinylchloride-Mischpolymerizate," pp. 120—125, Springer, Berlin (1951), and "Vinyl and Related Polymers," by C. A. Schildknecht (1952); and also in U.S. Patents Nos. 2,426,808, 2,590,651 and 2,996,489 (hereafter "the '489 process", for brevity), inter alia.

The process of the present invention permits the chlorination of PVC in water without the use of swelling agents. The use of swelling agents is taught in the '489 process. The '489 process produces excellent quality CPVC except that the CPVC must be freed from residual swelling agents, as described for example, in U.S. Patent No. 4,147,859. Also, the CPVC is produced more slowly, and is therefore less economical. As is well-known in the art, due to the high cost of PVC and the expense of chlorinating the PVC, it is essential that the processing costs be minimized if the CPVC product is to be an affordable commodity. Hence the intense concentration in the art to develop an improved process.

The art has long recognized the problem of relatively slow chlorination of vinyl chloride resins and much effort has been expended to overcome this problem without sacrificing the quality of the CPVC. For example, U.S. Patent No. 3,100,762 to Shockney (hereafter "the "762 process" for brevity) describes obtaining faster chlorination than in the '489 process by conducting the chlorination at elevated temperature and pressure in the presence of a swelling agent, but in the absence of photo-illumination. It is taught therein that no catalyst, and particularly no photo-illumination is required under the improved conditions of temperature in the range from 60°C to 100°C, and a reactor pressure in the range from 1.38 to 5.52 bar (20 to 80 psig), if oxygen is substantially excluded from the reactor, but that inferior chlorinated products are obtained under the foregoing reaction conditions when the chloromethane swelling agent is omitted from the reaction mixture.

The '762 process failed to discover the critical importance of photo-illumination, though it may be stated that the criticality of photo-illumination was overlooked because of the presence of swelling agent which was deemed essential. Yet, it must also be recognized that the '489 process taught that with photo-illumination in the presence of a swelling agent, temperatures not higher than 65°C were to be used. The drawbacks of the '762 process were that (a) it required a swelling agent, (b) it maintained constant temperature, and most important, (c) the CPVC product had a heat distortion temperature ("HDT" for brevity), of less than 115°C. It has now been found that with a particular set of process conditions, specified in the instant invention, the swelling agent may be omitted, and at the same time, the quality of the product and the economic attractiveness of the process are improved.

A succession of concerted efforts have been directed to the development of a process for the water chlorination of PVC without the use of swelling agents. For example, U.S. Patent No. 3,506,637 teaches the use of a specially prepared PVC which is chlorinated in the presence of a controlled supply of oxygen in the absence of swelling agents, U.S. Patent No. 3,534,013 also teaches the chlorination of a specially prepared PVC which is prepared by suspension or emulsion polymerization of the vinyl chloride monomer in the presence of a chlorinated lower alkane. Still another process, disclosed in U.S. Patent No. 4,049,517 (hereafter "the '517 process" for brevity) teaches varying the amount of ultraviolet radiation (referred to as "light ramping") during the chlorination reaction to control the reaction rate within predetermined limits, thus avoiding the use of a swelling agent for the PVC, but failed to discover the importance of either (a) autogenously increasing temperature (referred to as "autogenous temperature ramping" because of the self-induced increase of temperature due to the exothermic reaction), or, (b) an isothermal reaction at a temperature above 65°C (so maintained by appropriate heat transfer), if in each case, the pressure is maintained at a level in the range from 1.72 to 6.90 bar (25 to 100 psig), or even higher, and, the level of radiation is maintained at a predetermined level.

This importance of autogenous temperature ramping, or isothermal reaction above 65°C in the alternative, was overlooked in the '517 process because of the expected relationship of pressure and temperature on gases as evident by the statement that, even if the amount of the dissolved $Cl_2$ is increased to several times as much as that under atmospheric pressure, the reaction rate under pressure is almost the same as that under atmospheric pressure, when the same quantity of ultraviolet light irradiates a unit amount of PVC. This finding led to the conclusion that $Cl_2$ was not insufficient in the reaction under atmospheric pressure. This conclusion has been found to be contradicted by the process of the instant invention because it is now evident that elevated pressure must be used.

A process for the preparation of chlorinated polyvinyl chloride resin powders is disclosed in GB—A 13 78 364. This process is carried out at a temperature of about 50°C under atmospheric pressure in aqueous suspensions, but did not result in CPVC products having desired properties, as the influence of elevated pressure, temperature, absence of a swelling agent and of oxygen on the properties of the polymer was not evident.

Though each of the aforementioned references recognized the practical onus of a determinedly slow chlorination reaction for PVC, and some indicate the desirability of leaving out the swelling agent, none indicates that the swelling agent could be left out if a particular combination of elevated pressure, elevated temperature, absence of oxygen, and a substantially constant amount and intensity of ultraviolet illumination was employed. No reference teaches that such a combination of process conditions would increase the concentration of $Cl_2$ in the aqueous phase so significantly that the known rate-limiting effect of low $Cl_2$ concentration would be counteracted. Nor is it expected that the rate of conversion of PVC into CPVC in the aqueous phase, would be such that, upon the autogenous ramping of temperature in the reactor, the pressure does not get ramped significantly. Further, though it was known that higher porosity of PVC increases the rate of chlorination it was also known that higher pressures produced lower quality, if not unstable, CPVC product. Still further, no reference suggests that a water chlorination of PVC without the use of swelling agents, may provide the rates specified in this invention, without sacrificing the quality, and particularly the heat stability of the CPVC produced.

Summary of the invention

It has been discovered that poly(vinyl chloride) resin ("PVC") may be photochlorinated in an aqueous suspension without the use of swelling agents, under elevated pressure and temperature, to yield high quality chlorinated poly(vinyl chloride) resin ("CPVC") at rates not heretofore attainable.

It has more specifically been discovered that PVC may be chlorinated without the use of swelling agents for the PVC, preferably above 65°C and pressure above 2.07 bar (30 psig), provided the reactor is substantially free of molecular oxygen, to obtain excellent quality CPCV having a dynamic thermal stability (hereafter "DTS" for brevity) defined hereinafter, of 12 minutes or higher, at surprisingly high reaction rates. The solvent-free chlorination reaction may be carried out starting with a heated suspension of PVC, preferably above 65°C but below the glass transition temperature ("$T_g$") of the PVC, and (a) photochlorinating under pressure, allowing the temperature in the reactor to be autogenously ramped to a preselected finishing temperature in the range from 60°C to 120°C; or, (b) thermally reacting the chlorine and PVC substantially isothermally under pressure in a first stage reaction, then, when the first stage reaction slows down, photochlorinating the suspension in a second stage reaction at substantially constant temperature; or, (c) upon pressurizing the reactor with chlorine, immediately photochlorinating the suspension substantially isothermally.

It is therefore a general object of this invention to provide a process for producing CPVC having a specific density in the range from 1.50 g.cm$^{-3}$ to 1.65 g.cm$^{-3}$ at 25°C, and other commercially acceptable · specifications, comprising, (a) introducing an aqueous suspension containing from 15 to 35% by wt of a macrogranular PVC (homopolymer) into a reactor operable under elevated pressure: (b) removing essentially all oxygen from the suspension; (c) introducing chlorine into the reactor until the pressure therewithin is in the range from 1.72 to 6.90 bar (25 to 100 psig); (d) irradiating the PVC with ultraviolet light at a level in the range from 2 to 50 W per 3,79 l (one gallon) of suspension to initiate the PVC; (e) maintaining a finishing temperature in the range of from 60°C to 120°C and maintaining this temperature during chlorination; (f) continuing to introduce chlorine into the reactor as the reaction proceeds, so that the pressure in the reactor is maintained substantially constant within said range of pressure; (g) stopping flow of chlorine into the reactor when sufficient $Cl_2$ has been added to produce a desired specific density of CPVC upon completion of the reaction; and, (h) separating solid macrogranular CPVC from the suspension, and removing aqueous hydrochloric acid present in the suspension of CPVC to obtain the CPVC product having a HDT between 100 and 135°C.

It is a specific object to chlorinate PVC having a porosity in the range from 0.1 cm$^3$.g$^{-1}$ to 0.7 cm$^3$.g$^{-1}$, a surface area in the range from 0.7 m$^2$/g to 3.0 m$^2$/g, and an inherent viscosity in the range from 0.5 to 1.4, at a reaction rate sufficient to chlorinate an aqueous supension of solid PVC macrogranules, which suspension has a concentration of from 15 to 35% by wt solids, so as to obtain a CPVC product which has a heat distortion temperature in the range from 100°C to 135°C.

Detailed description of the preferred embodiment

The process of this invention is based on a unique interrelationship of pressure and temperature in the water-chlorination of macrogranular poly(vinyl chloride) resin (hereafter "PVC" for brevity), as this interrelationship affects the dynamic thermal stability ("DTS") of the resulting chlorinated poly(vinyl chloride) resin (hereafter "CPVC" for brevity) produced, and also the rate at which the CPVC is produced. By "DTS" we refer to a test for CPVC when it is compounded in a typical CPVC composition ("test recipe") and used with a Brabender Plastograph mixing head, as will be described in more detail hereinafter. Heretofore, pressure was thought to have no effect on water-chlorinations which were photo-illuminated, that is, were catalyzed by actinic radiation. In reactions which were not photo-illuminated, it was taught that the absence of swelling agents gave inferior results. Since the prior art has consistently taught the photo-illuminated chlorination ("photo-chlorination") of aqueous suspensions in the presence of a swelling agent such as chloroform, reaction temperature was not raised above 65°C, not only because such swelling agents are low-boiling solvents, but because it was taught that temperatures above 65°C were detrimental to the production of commercially acceptable CPVC product. Thus the criticality of elevated temperature and pressure in the photo-illuminated water-chlorination of PVC, in the absence of swelling agents, was missed. Also missed was the criticality of the absence of oxygen when a suspension of PVC, without any swelling agent in it, is to be photo-chlorinated.

The PVC useful in the present invention is the homopolymer of vinyl chloride obtained by either the mass or suspension polymerization techniques, in the form of porous solid macrogranules. The term "macrogranules" is used herein to define a cluster or aggregate of randomly closely packed primary particles of polymer. A handful of macrogranules has the feel of fine sand, and are also referred to as "grains". Macrogranules of PVC which are converted to CPVC retain their macrogranular form. A macrogranule of PVC or CPVC will typically have an average diameter in excess of 20 μm with a preponderance of particles in excess of 50 μm in diameter. A preferred size distribution of each macrogranule is in the range from 50 to 500 μm and conventionally ranges from 100 to 200 μm.

Each macrogranule is made up of a multiplicity of primary particles each in the size range from 0.05 μm to 5 μm and more typically in the range from 0.5 μm (5000 Å) to 2 μm (20,000 Å). The bulk of the primary particles are usually submicronic in size, tough conditions of polymerization will determine the actual size distribution of both primary particles, and also, macrogranules. Macrogranules can be characterized by their porosity, that is, internal pore volume, and surface area.

The morphology of PVC and CPVC macrogranules, specifically the porosity and surface area, are important properties which determine the physical properties of the polymer after it is molded. Since CPVC is generally derived by the chlorination of PVC, it has been found that the properties of product CPVC may be tailored to a large extent by precisely controlling the conditions under which precursor PVC is polymerized. Such a process is disclosed in U.S. Patents Nos. 3,506,637 and 3,534,013. With care, the internal morphology of PVC macrogranules may be particularly tailored to permit relatively fast chlorination in a fluidized bed process catalyzed by actinic radiation. Thus, though it is desirable to use highly porous PVC as a starting material to get high chlorination rates, the properties of the CPVC product obtained are generally too poor to meet commercial standards. Therefore, a viable choice of PVC starting material depends in large measure on the characteristics of the process to be used. Since the choice of process must be made with a view of using a particular starting material, it will be evident that this interdependence leaves no obvious choice as to how a "fix" on each selection is to be had.

Most preferred as a starting material is a suspension polymerized PVC having a porosity in the range from 0.28 to 0.35 $cm^3.g^{-1}$, a surface area in the range from 1.0 $m^2/g$ to 3 $m^2/g$, and an inherent viscosity in the range from 0.95 to 1.2, that is, having a relatively high molecular weight. The molecular weight of PVC may be related to its inherent viscosity which is determined herein by dissolving 0.24 gram of the resin in 50 ml of cyclohexanone while mildly heating and agitating on a solution roller. The solutions are then filtreed into an appropriate Ubbelohde viscometer, previously calibrated for the pure solvent. The flow times in seconds for the solutions are determined at four different dilutions to obtain flow data at a number of concentrations. A portion of the original filtered solution is dried to constant weight at 130°C to obtain a true concentration value. The ratio of the flow time of the solution to the flow time of the pure solvent is a value known as the "relative viscosity". The "inherent viscosity" is defined with respect to relative viscosity as follows:

$$\text{Inherent viscosity} = n_i = (2.303/C)(\log_{10} n_{rel})$$
$$= \ln(n_{rel}/C)$$

The PVC resin starting material useful in the process of this invention preferably has a high molecular weight such that it possesses an $n_i$ (inherent viscosity) in the range from 0.5 to 1.4, the most commonly used PVC resins having an $n_i$ in the range from 0.8 to 1.1, or slightly higher.

To produce chlorinated CPVC commercially, and preferably economically, it has been found that a relatively concentrated aqueous suspension of PVC must be chlorinated. But such a relatively concentrated suspension cannot be routinely uniformly chlorinated to get high quality. By "uniformly chlorinated" we describe a CPVC resin having a density which does not deviate more than 20% from the mean density, and a surface area which does not deviate more than 30% from the mean surface area. By "relatively concentrated" we refer to a concentration of 15 to 35% by wt of PVC solids in the suspension. Since the physical characteristics of such a relatively concentrated suspension of PVC in water are quite different from those having relatively low concentrations, the problems of chlorination in each are quite different, such factors as viscosity of the suspension, clumping of macrogranules, penetration of ultraviolet light, diffusion of gases into and out of the liquid and solid phases present, inter. alia, not lending themselves to extrapolation by known methods. It has been found that a concentration of PVC higher than the specified range results in non-uniform product, while concentrations below 15% yield uniform product, but is not economical. By "aqueous suspension" we refer to a slurry-like mixture of PVC macrogranules suspended in water. Though, initially the water is not deliberately acidified by the addition of acid, HCl acid is formed during the course of the chlorination and is absorbed in the water. The above-specified concentration of PVC in the suspension is found to yield high output of CPVC for a given reactor volume, without sacrificing the quality of the product, which quality cannot be compromised. This process is particularly directed to a batch process since wholly different considerations enure to the operation of a continuous process.

It is essential for the purpose of obtaining the desired CPVC product that oxygen be removed from the aqueous suspension before chlorination is initiated. This may be effected in any convenient manner. For example, a hot suspension at a temperature in the range from 60°C to 75°C, and containing about 30% PVC may be introduced into a batch reactor and subjected to a vacuum at that temperature so that it boils. Lower temperatures as low as 20°C may be employed, but removal of oxygen at such low temperatures is impractical, particularly since the temperature of the suspension is to be raised if it is to be chlorinated by the process of this invention. Removal of oxygen is assisted by agitation of the suspension. After several minutes, depending upon the size of the charge to the reactor, the temperature, and the initial oxygen content of the suspension, it is found that essentially all the oxygen has been removed. The same result may be obtained by sparging an inert gas such as nitrogen through the suspension, again preferably, when the suspension is hot. Any conventional test to determine the concentration of oxygen may be used, and it is preferred to have less than 100 ppm of oxygen remaining in the slurry.

During the period when oxygen is removed, the temperature of the suspension may be lowered sufficiently to require heating it to return it to a temperature within the range from 60°C to 75°C which is the preferred starting temperature at which the photochlorinated reaction is to be initiated. Such heating as may be required is preferably done after $Cl_2$ is sparged into the suspension from a liquid $Cl_2$ cylinder until the pressure in the reactor reaches 1.72 bar (25 psig), at which point the suspension is saturated with $Cl_2$. It is preferred that this pressure be somewhat higher, that is in the range from 2.41 to 6.90 bar (35 to 100 psig), to get the optimum results. Pressures higher than 6.90 bar (100 psig) may be employed, though it will be recognized that the cost of equipment for operation at such higher pressures adversely affects the economics of the process. The amount of $Cl_2$ charged to the reactor is determined by the weight loss in the $Cl_2$ cylinder.

After the reactor is pressurized with chlorine, the reactor is preferably brought up to a "soak temperature in the range from 60°C to 75°C, at which soak temperature the suspension is maintained for a soak period in the range from 1 min to 45 min. The soak period appears to have an unexpectedly beneficial function. It provides $Cl_2$ the opportunity to diffuse into the macrogranules where it will do the most good.

A higher soak temperature in the range from 75°C to 120°C may be used, particularly if it is desired to thermally initiate the chlorination reaction. Thermal initiation commences above 75°C and the rate of chlorination increases with increasing temperature. It will be apparent that the reactor must be adequately pressured if the temperature is to exceed the boiling point of the suspension.

A longer soak period, under pressure, may be used if the soak temperature is lower than 60°C, but a soak period longer than 45 min is undesirable. An unnecessarily long soak period not only defeats a primary object of this water chlorination process, namely to speed up the production of CPVC.

It must be recognized that the relatively high pressure in the reactor, which pressure is preferably maintained constant, also retards the removal of HCl and HOCl from within the macrogranules, and if too high, adversely affects the porosity of the macrogranules to the detriment of the stability of the CPVC product. Again, it is preferred to maintain agitation of the suspension during soaking, though the intensity of agitation may be substantially lower than that preferred during the photo-chlorination step to follow. In fact, the aqueous suspension is preferably kept agitated from the time the preheated PVC suspension is charged to the reactor, until the end, when the CPVC slurry is ready to be dumped.

Irrespective of the length of the soak period and the temperature at which the suspension is maintained during the soak period, it is essential to complete the chlorination reaction under photo-illumination, preferably with ultra-violet light, or the desired conversion of PVC to CPVC product does not occur.

It is feasible to carry out the process of this invention without a soaking step, but such a process is economically impractical. For example, after removing oxygen from an aqueous PVC suspension charged to the reactor, the lights may be turned on prior to introducing the chlorine. Chlorination proceeds at a rate which depends upon the pressure and temperature within the reactor, higher rates being favored at higher temperature and pressure. When pressure and temperature are raised to a level sufficient to give a favorable rate without a soaking step, the uniformity of the CPVC product suffers.

After the "soak" period, the suspension is photo-illuminated with a bank of ultraviolet lights in the manner described in the '489 process, except that it has been found that a relatively high and constant intensity of light should be used, preferably in the range from 5 W to 50 W per 3.79 l (one gallon) of suspension, if high rates of chlorination with a relatively concentrated suspension are to be obtained. With a preferred high level of photo-illumination it has been found that reaction rates far greater than in prior art aqueous suspension chlorination processes may be obtained. Most important, the reaction rates may be achieved without a sacrifice in product quality. For example, in contrast with the '762 process for chlorinating a non-photo-illuminated suspension, the chlorination of an aqueous suspension of PVC at 60°C and 2.76 bar (40 psig) by the instant process, with a soak period, photo-illumination and "temperature ramping" as will be described hereinbelow, produces a reaction rate of from 0.01—0.04 min$^{-1}$ and a HDT of a test recipe of from 100°C to 130°C. The reaction rate is computed on the basis of it being a first order reaction, using the formula

$$k = -2.303 \ln (1-x)/t$$

where,

x is fractional conversion to one chlorine atom per carbon atom, and

t is time in minutes.

It has been found that carrying out a chlorination reaction under widely fluctuating elevated temperature and pressure while photo-illuminating the suspension does not produce CPVC of adequate quality and stability. It is essential, at elevated pressure, either (a) to commence the chlorination reaction at a temperature in the range from 60°C to 75°C, and then to finish the reaction at an even higher temperature generated because of the reaction, or (b) to maintain a substantially constant elevated temperature in the range from above 60°C to 120°C. No additional heat is required to be added to the reactor because the self-generated heat is sufficient to produce the desired increase in temperature, until it reaches a finishing temperature in the preferred range of from 80°C to 100°C. A finishing temperature as high as 120°C may be employed if the pressure is high enough. The "finishing temperature" is so termed because it is the temperature at which the chlorination reaction is "finished", that is, a preselected chlorine content in the CPVC has been attained. The precise finishing temperature in procedure "(a)", at which the autogenously ramped temperature levels off, will depend on several factors. It is most preferred to adjust the soak temperature, the mass of resin, and the level of photo-illumination so that the temperature is "ramped" by the self-produced heat of reaction until it levels off at a finishing temperature of 110°C.

Alternatively, to photochlorinate the PVC suspension substantially isothermally as in the procedure identified as "(a)" immediately hereinabove, the temperature of the suspension may be raised by heat exchange with a hot fluid circulated in the jacket of the reactor, or in tubes within the reactor, or both, soon after the soak period. The suspension is thus heated to a desired isothermal reaction temperature at which the remainder of the reaction may be continued and finished. This isothermal reaction temperature may be, as before, in the same temperature range as for the "ramped" reaction, that is, from 80°C to 100°C, except that it is maintained substantially constant at this level, so that the reaction continues and is finished substantially isothermally. It will be evident to one skilled in the art that the temperature at which the chlorination occurs should, at all times be below the $T_g$ of the resin in the suspension, whether the resin is a mass polymerized PVC, a suspension polymerized PVC, or a mixture of PVC and CPVC. For example, chlorination of a Geon®103 EP PVC resin having a $T_g$ of 84°C, must be commenced at a temperature below 84°C, though as the reaction progresses, the reaction temperature may be permitted to rise because the $T_g$ of the resin rises as the reaction proceeds to completion. It will also be evident to one skilled in the art, that the problem of maintaining the finishing temperature of the reaction substantially constant at about 90°C (say) during the exothermic chlorination reaction in a batch reactor requires highly effective heat transfer control or the resin will "burn". This problem is exacerbated as the size of the reactor increases, and is especially onerous in a 9463 l (2500 gallon), or larger, reactor.

Whichever procedure "(a)" or "(b)" is used, the progress of the chlorination reaction depletes the free chlorine in the reactor and additional $Cl_2$ is introduced into the reactor to maintain the pressure, and to make sure that the desired level of conversion of PVC to product CPVC is attained. The level of conversion is estimated by the amount of $Cl_2$ fed from the $Cl_2$ feed cylinder. It is not desirable to permit the pressure in the reactor to fluctuate more than 20% as the effects of wide fluctuations are reflected in poorer quality CPVC.

When sufficient chlorine is added to the reactor to result in the desired conversion of about 50% conversion (say) of PVC, that is, about 50% of all the vinyl chloride (monomeric) units have been chlorinated with at least one atom of chlorine, or, to result in a desired density of CPVC in the range from 1.50 to 1.65 g.cm$^{-3}$, the flow of chlorine to the reactor is stopped. The suspension is not cooled but dumped to be centrifuged and the CPVC freed from the aqueous phase, after which HCl acid is removed from the CPVC, preferably by neutralizing the CPVC with an aqueous solution of an alkali. The CPVC product is then washed with water to free the CPVC of residual alkali, and dried, all in a conventional manner, except that the temperatures at which the operations are carried out may be in the range from 60°C to 100°C which are higher than conventionally used.

The chlorinated products of this invention have specific densities in the range from 1.5 to 1.8 g.cm$^{-3}$ at 25°C, and a HDT in the range from 100°C to 135°C. The increase in HDT over conventionally prepared CPVC is ascribed to the probability that there are more 1,1,2-trichloroethylene units in a CPVC molecule than generally present, and which units are not otherwise obtained, at least in an amount significant enough to increase HDT so markedly, even if a conventional photo-illumination is carried out at about atmospheric pressure, with or without a swelling agent, for an extended period of time. When the '489 process is run for an extended period of time, to introduce 1,1,2-trichoroethylene units, an unacceptably high proportion of the CPVC resin is "burned", that is, has obvious discoloration, and poor processing characteristics.

The CPVC prepared according to the present water-chlorination process of this invention has even better chemical resistance, durability, higher softening point, and relatively higher heat stability than prior art CPVCs we have tested which were made in the absence of a swelling agent. The stabilizer-free resin is not degraded when heated in air for at least 10 minutes at 204 to 218°C (400 to 425°F). The chlorine content thereof is 57.4 to 70.9 wt percent (unchlorinated PVC contains 56.7% chlorine). The preferred resin has a specific density within the range of from 1.50 to 1.65 g.cm$^{-3}$ (65.3 to 69.7% chlorine), and a HDT (ASTM Test Method D-648-56) of from 100°C to 135°C, that is, at least 40°C higher than the HDT of unchlorinated PVC resins. The most preferred CPVC has a specific density in the range of from 1.53 to 1.6 g.cm$^{-3}$ at 25°C (65.5 to 67% chlorine) and a HDT of at least 100°C. The CPVC is further characterized by being substantially insoluble in acetone, but completely soluble in hot tetrahydrofuran.

The CPVC is useful in the rigid vinyl field for the manufacture of pipe, ductwork, tanks, appliance parts, etc., especially where the products will handle or contact hot water and other hot, corrosive liquids. It has found particular utility in the production of hot water piping for industrial and domestic use. Ordinarily, a small amount of another resin or rubber, e.g., chlorinated polyethylene, styrene-acrylonitrile copolymer, or chlorinated isobutylene is blended with the chlorinated PVC resin to improve its shock resistance and mechanical processibility. The pigments, lubricants and stabilizers well known in the vinyl art also can be incorporated therein. Despite the improved rate at which the CPVC product is formed in the swelling-agent-free process of this invention, the CPVC is uniformly chlorinated, and when compounded with presently used, known materials, no processing disadvantages are evident. *Dynamic Thermal Stability* ("DTS") testing: Product CPVC is blended with stabilizers, plasticizers, pigments and the like, the particular additives being chosen for the particular commercial product (for example, one of those identified hereinabove) for which it is to be used. The blended composition (referred to as a "production compound") must meet several tests, one of the most important of which is the DTS test. This test is conducted with small samples of the production compound, which samples are referred to as "test compounds", using a Brabender Plastograph mixing head.

The recipe for a typical test compound is provided in "Polyether Modifiers for Polyvinyl Chloride and Chlorinated Polyvinyl Chloride", by P. Dreyfuss, M. P. Dreyfuss, and H. A. Tucker, in Advances in Chemistry Series, Number 128, Polymerization Kinetics and Technology, American Chemical Society, 1973. The recipe is as follows;

| Material | Parts by wt |
|---|---|
| CPVC (Geon® 633×561) | 100. |
| Stabilizer (dibutyltin thioglycollate) | 2.5 |
| TiO$_2$ (Rutile) | 5.0 |
| Lubricant (low mol wt polyethylene) | 1.0 |
| Chlorinated polyethylene | 8.75 |

The ingredients are compounded by milling on a 6 inch diameter mill heated to 204°C (400°F). All samples are milled for two minutes after banding on the roll. The test compound is then cooled and cut into chunks for further evaluation.

Using a Brabender Plastograph Measuring Head Model GT545, with Roller Type 5, which is a mixer with irregularly shaped rollers, and the operating procedure set forth in detail by L. L. Blyler and J. H. Daane in "An Analysis of Brabender Torque Rheometer Data" published in Polymer Engineering & Science, 7, 178, March 1967, the mixing bowl temperature is set at 204°C (400°F). Then 65 g of the cubed test compound are added to the head and the compound allowed to heat up for 3 min, after which the mixer is started at 35 revolutions per minute (rpm). The torque of the mixing head and the temperature of the compound are recorded as a function of time. The torque (meter-grams) is plotted as a function of time (minutes) to obtain a torque curve. The DTS time is determined by the intersection of a a tangent line through the breakdown point (referred to as "point B"), and the extrapolation of the constant torque part of the curve. The breakdown point B can be read easily from the torque curve and corresponds to the gross decomposition of the compound. The DTS time so obtained is correlatable to the performance of the test compound in commercial production equipment.

The DTS time is affected by the temperature of the compound in the mixing head, higher temperatures decreasing the DTS time exponentially. The DTS time is normalized to a standard temperature of 224°C (435°F) by the following formula:

$$\log\,\theta_c = \frac{435 - T_B}{-81.04} + \log\,\theta_A$$

where,

$T_B$ is the temperature of the compound at breakdown

$\theta_A$ is the raw DTS time, and

$\theta_c$ is the DTS time corrected to 435°F.

The following illustrative examples set forth various runs for the chlorination of a general purpose PVC resin, some of which runs are made according to prior art processes. Unlike prior art processes for chlorination of PVC with swelling agents, the process of this invention is not limited to using suspension polymerized PVC, but may equally use mass polymerized PVC.

Example 1

*Chlorination using the '489 process:* An externally jacketed 9463 l (2500 gallon (gal)) reactor, equipped with a pitch-bladed turbine, is charged with 5488 l (1450 gal) of water and 1229,7 kg (2700 pounds (lb)) of a general purpose PVC such as Geon® 103 EP resin (inherent viscosity=1.0) in the form of a suspension or slurry which is previously heated to about 52°C in a slurry charge tank. The reactor, which preferably is a pressure vessel suitable for operation at pressures up to 6.90 bar (100 psig), is tightly closed so that it can be slightly pressured at least up to 0.41 bar (6 lbs/in² gauge (psig)). To the warm suspension is added 306.2 kg (675 lb) of chloroform and the suspension is agitated to ensure uniform distribution of the chloroform throughout the reactor. Thereafter, while the suspension of PVC is being agitated, chlorine is sparged into the reactor directly below the turbine, and four (4) 4500 W ultraviolet lights immersed in the suspension are turned on to initiate and maintain the chlorination reaction.

Cooling water is circulated through the jacket of the reactor to maintain the temperature of 52°C. Chlorine is continued to be charged to the reactor until the pressure is 0.41 bar (6 psig), and the rate of chlorine charged to the reactor is controlled so that the pressure is maintained, and also the rate of chlorination as estimated from the heat duty of the cooling jacket. When a total of 680.4 kg (1500 lb) of chlorine has been charged, as determined by the loss in weight of a chlorine cylinder on a weighing scale, the chlorine feed is shut off. The amount of chlorine to be charged is calculated so as to yield a CPVC product having a predetermined specific density upon completion of the reaction, and in this example, a specific density of 1.56 g.cm⁻³ and a chlorine content of 66.8 %.

The chlorination reaction continues until substantially all the free chlorine is reacted, this point being evidenced by a slight vacuum appearing on the reactor's pressure gauge. The lights are turned off, and after about 15 min, the reactor is opened to the atmosphere and its contents dumped. The time for completion of the reaction, from the time the reactor is charged with heated PVC suspension, to the time the reactor is dumped, is about 8 hours. The CPVC reaction product is recovered from the dumped suspension, and the HCl acid adhering to it is removed either by steam stripping, or by neutralizing with alkali. The HCl-free CPVC is then washed to free it from dissolved salts, and dried. Upon testing in a typical CPVC compound recipe such as that given hereinabove, the CPVC product is found to have a DTS of 11 mins. that is, θ=11 min.

Example 2

*Chlorination using the '762 process:* In the same 9463 l (2500 gal) jacketed reactor used in Example 1 hereinabove, a suspension of 1227.4 kg (2700 lb) of Geon®103EP PVC resin and 5488 l (1450 gal) of water heated to about 60°C, is agitated while 306.2 kg (675 lb) of chloroform are added. After about 15 min, chlorine is sparged into the reactor as in Example 1 hereinbefore, until 680.4 kg (1500 lb) of chlorine are charged. The lights are not turned on. The reaction is initiated, and chlorine is continued to be fed to the reactor so as to maintain a pressure of 5.52 bar (80 psig). The chlorine feed is then shut off and the reaction allowed to go to completion. As before, cooling water in the jacket maintains the temperature of the reaction at 60°C. The time for completion of the reaction from the time the reactor is charged with the heated suspension until the time the reactor is dumped, is over 9 hours. The CPVC product is recovered and tested in an analogous manner to that described in Example 1 hereinabove. The CPVC product produced according to the '762 process is found to have a DTS of about 9 min, which is deemed unsatisfactory for a commercial CPVC composition such as that used for the extrusion of pipe, (θ_c=9 min).

Example 3

*Solvent-free chlorination with temperature ramping:* In the same 9463 l (2500 gal) jacketed reactor used in Examples 1 and 2 hereinabove, a suspension of 1224.7 kg (2700 lb) of Geon®103EP PVC resin and 5488 l (1450 gal) of water heated to 62°C is subjected to a vacuum drawn on the reactor until the suspension boils, at least near its surface. The vacuum and agitation are maintained until substantially all molecular oxygen is driven out of the suspension. A typical vacuum condition is an absolute pressure of 0.22 bar (164 mm mercury) at 62°C which is held for about 15 min. The vacuum is then broken by sparging chlorine under the turbine so that it is quickly and thoroughly dispersed in the suspension, and the chlorine is continued to be fed to the reactor until the reactor is pressured to 2.28 bar (33 psig), which is to be the reaction pressure.

The reactor is held at 62°C and 2.28 bar (33 psig) for a soak period of about 30 min, after which the 4 ultraviolet lights (4500 W each) are turned on. Chlorination commences at a high rate as evidenced by the rise in temperature of the suspension. The pressure in the reactor is maintained by feeding chlorine on demand until 657.7 kg (1450 lb) of chlorine are fed, being careful not to allow too steep a temperature rise which has a tendency to produce localized burning of the CPVC resin formed by the reaction. When the temperature of the suspension is autogenously ramped to about 95°C, the reaction is allowed to go to completion at this finishing temperature which is maintained by providing the necessary cooling water in the reactor's jacket. The chlorine supply is then shut off but the lights are left on so that most of the chlorine reacts with the PVC resin. The lights are turned off when the pressure drops below atmospheric, and preferably to a sufficient vacuum so that very little free chlorine is left in the reactor.

The contents of the reactor are then dumped, neutralized, filtered, washed and dried, as is conventionally done. The time for completion of the reaction, from the time the reactor is charged with the heated suspension of PVC, to the time when the reactor is dumped, is less than four hours. The resulting CPVC is substantially the same in appearance as the CPVC produced as described in Example 1, but testing of the CPVC produced by temperature ramping under pressure, gives a DTS above 12 min. Additional runs made in an analogous manner, under temperatures in the range from about 65°C to 120°C, and pressures in the range from atmospheric to 6.90 bar (100 psig) provide a CPVC product with excellent DTS. In particular, runs made at pressures above 2.07 bar (30 psig) and at temperatures above 65°C yield a product having a DTS above 12 min. without any loss of other desirable qualities of the CPVC product.

Example 4

*Two-stage solvent-free chlorination isothermally:* In the same 9463 l (2500 gal) jacketed reactor used in the examples hereinbefore, a suspension of 1224.7 kg (2700 lb) of Geon®103EP PVC resin and 5488 l (1450 gal) of water heated to 80°C, is subjected to a vacuum to remove oxygen as described in Example 3 hereinabove, while the suspension is agitated. Chlorine is sparged into the reactor in an analogous manner until the pressure is 2.62 bar (38 psig).

Chlorination is thermally initiated and the lights are not turned on in the reactor. The reaction temperature of 80°C is maintained by appropriate cooling in the jacket of the reactor while 453.6 kg (1000 lb) of chlorine are fed to the reactor upon demand. At this point, the reaction appears to have slowed down so much that the pressure in the reactor does not decrease noticeably when the chlorine feed is stopped. Therefore the lights are turned on to complete the reaction, whereupon the demand for chlorine immediately increases, and chlorine is fed to the reactor until all 657.7 kg (1450 lb) are charged. The reaction is allowed to go to completion as in Example 3 hereinabove, after which the CPVC product is recovered as described therein, and tested.

The time for completion of the reaction, from the time the reaction is charged with heated PVC suspension, until the time the chlorinated suspension is dumped from the reactor, is less than 4 hours. When compounded in the test recipe as before, the CPVC produced by a first stage thermal initiation, and completion of the reaction in a second stage under photo-chlorination, yielded a DTS above 12 min. Additional runs conducted in an analogous manner, substantially isothermally at temperatures in the range from above 65°C to 120°C, with sufficient pressure maintained by the chlorine charged to prevent the suspension from boiling, uniformly yielded CPVC product of excellent quality and heat stability, provided the first stage thermal initiation was followed by a second stage photochlorination.

Example 5

*Single-stage solvent-free chlorination isothermally:* In a manner analogous to that described hereinabove for Example 4, the same reactor is charged with the PVC suspension heated to 80°C, and subjected to a vacuum to remove oxygen while the suspension is being agitated. Chlorine is sparged into the reactor in an analogous manner until the pressure is 2.62 bar (38 psig), and the lights are immediately turned on. The thermal initiation of the reaction, though present to some extent, is not significant, and photochlorination proceeds in a single stage reaction which is maintained at a substantially constant temperature of 80°C by providing cooling water in the jacket of the reactor.

As in Example 4 hereinabove, 657.7 kg (1450 lb) of chlorine are charged and allowed to react, with the lights left on, after the chlorine feed is stopped. The time for completion of the reaction, from the time the heated PVC suspension is charged to the reactor, until the reactor is dumped, is less than 4 hours.

The CPVC product formed is recovered and tested in the test recipe as described hereinabove, and found to give a DTS of above 12 min with excellent appearance.

In each of the examples 3, 4 and 5 illustrated hereinabove, it will be noted that less chlorine 657.7 kg (1450 lb) is sparged to the reaction than in the examples 2 and 3 which used a chloroform swelling agent. This difference is attributable to some of the chlorine being consumed in side reactions with the swelling agent.

Further, in each of the examples 3, 4 and 5 chlorination is initiated, whether in the presence of ultraviolet light or not, at a temperature below the $T_g$ of the PVC starting material. It will be appreciated however, that the $T_g$ is generally measured with an accuracy of $\pm3$°C, and some resins may be more tolerant of an initial chlorination temperature above their $T_g$, particularly if chlorination proceeds so quickly that the resin can mask the effects of being exposed to a temperature higher than its $T_g$ when chlorination was commenced.

Tests of CPVC product obtained with examples 3, 4, and 5 are found routinely to give corrected DTS of at least 12 min (that is, $\theta_c$=12 or more) but such $\theta_c$ are not routinely repetitively obtained with CPVC obtained as in examples 1 or 2.

**Claims**

1. A process for producing chlorinated poly-(vinyl chloride) resin having a specific density within the range from 1.50 to 1.65 g.cm$^{-3}$ at 25°C in an aqueous suspension using $Cl_2$ as chlorinating agent, comprising:

(a) introducing an aqueous suspension of a macrogranular homopolymer of vinyl chloride containing from 15 to 35% by wt poly(vinyl chloride) and lacking any swelling agent into a reactor operable under elevated pressure;

(b) removing essentially all oxygen from said suspension;

(c) introducing chlorine into the reactor until the pressure therewithin is in the range from 1.72 to 6.90 bar (25 to 100 psig);

(d) irradiating the poly(vinyl chloride) with ultraviolet light at a level in the range from 2 W to 50 W per 3.79 l (1 gallon) of the aqueous suspension;

(e) maintaining a finishing temperature in the range from above 60°C to 120°C during chlorination;

(f) continuing to introduce chlorine into the reactor as the reaction proceeds, so that the pressure in the reactor is maintained substantially constant within said range of pressure;

(g) stopping flow of chlorine into the reactor when sufficient chlorine has been added to produce a suspension of chlorinated poly(vinyl chloride) having said specific density upon completion of the reaction; and,

(h) separating solid macrogranular chlorinated poly(vinyl chloride) from said suspension of chlorinated poly(vinyl chloride), and removing aqueous hydrochloric acid present in said suspension of chlorinated poly(vinyl chloride) to obtain a chlorinated poly(vinyl chloride) product characterized by having a heat distortion temperature measured by ASTM Test Method D648 which is in the range from 100°C to 135°C.

2. The process of claim 1, including in addition, after introducing chlorine into the reactor until said pressure is reached, soaking the poly(vinyl chloride) under said pressure for a period of from 1 minute to 45 minutes at a "soak" temperature in the range from 60°C to 75°C.

3. The process of claim 1 wherein said poly(vinyl chloride) resin has a porosity in the range from 0.1 cm$^3$.g$^{-1}$ to 0.7 cm$^3$.g$^{-1}$, a surface area in the area from 0.7 m$^2$/g to 3. m$^2$/g, and an inherent viscosity in the range from 0.5 to 1.4.

4. The process of claim 1 wherein said poly(vinyl chloride) resin is suspension polymerized, has a porosity in the range from 0.2 cm$^3$.g$^{-1}$ to 0.6 cm$^3$.g$^{-1}$ and a surface area in the range from 1.0 m$^2$/g to 1.5 m$^2$/g.

5. The process of claim 1 wherein said poly(vinyl chloride) resin is mass polymerized, has a porosity in the range from 0.1 to 0.4 g$^3$.cm$^{-1}$, and a surface area in the range from 0.8 m$^2$/g to 1.0 m$^2$/g.

6. The process of claim 1 wherein maintaining said finishing temperature is attained by allowing an autogenous increase of temperature from said soak temperature to said finishing temperature.

7. The process of claim 6 wherein said finishing temperature is in the range from 80°C to 100°C.

8. The process of claim 1 wherein said finishing temperature is maintained substantially constant from when chlorination is initiated until photochlorination results in said chlorinated poly(vinyl chloride) product.

9. The process of claim 8 wherein said finishing temperature is in the range from 80°C to 100°C.

10. The process of claim 1 wherein said finishing temperature is maintained substantially constant from when photochlorination is initiated substantially immediately after introducing chlorine into the reactor, until said chlorinated poly(vinyl chloride) product is obtained.

11. The process of claim 10 wherein said finishing tempreature is in the range from 80°C to 100°C.

**Patentansprüche**

1. Verfahren zur Herstellung von chloriertem Poly(vinyl-chlorid)-Harz mit einer Dichte von 1,50 bis 1,65 g.cm$^{-3}$ bei 25°C in wäßriger Suspension unter Verwendung von $Cl_2$ als Chlorierungsmittel durch

(a) Einführen einer wäßrigen Suspension eines makrogranularen, 15 bis 35 Gew.-% Poly-(vinylchlorid), jedoch keinerlei Quellungsmittel, enthaltenden Homopolymers von Vinylchlorid in einen Reaktor, der für das Arbeiten bei höheren Drucken ausgelegt ist,

(b) Entfernen in wesentlichen der Gesamtmenge des Sauerstoffs aus dieser Suspension,

(c) Einleiten von Chlor in den Reaktor, bis der Druck in demselben im Bereich von 1,72 bis 6,90 bar (25 bis 100 psig) liegt,

(d) Bestrahlen des Poly(vinylchlorids) mit ultraviolettem Licht auf einem Niveau von 2 W bis 50 W pro 3,79 l (1 Gallone) der wäßrigen Suspension,

(e) Einhalten einer Endtemperatur im Bereich von oberhalb von 60°C bis 120°C während der Chlorierung,

(f) Forsetzung des Einleitens von Chlor in den Reaktor mit forschreitender Reaktion, so daß der Druck in dem Reaktor innerhalb des angegebenen Druckbereichs im wesentlichen konstant gehalten wird,

(g) Beendigung des Einleitens von Chlor in den Reaktor nach der Zugabe einer für die Erzeugung von chloriertem Poly(vinylchlorid), das nach Beendigung der Reaktion die angegebene Dichte besitzt, hinreichenden Menge Chlor, und

(h) Abtrennen des festen makrogranularen chlorierten Poly(vinylchlorids) aus der Suspension von chloriertem Poly(vinylchlorid) und Entfernen der in der Suspension des chlorierten Poly(vinylchlorids) vorhandenen wäßrigen Salzsäure zur Gewinnung eines chlorierten Poly(vinylchlorid)-Produkts, das durch eine Formbestädigkeit in der Wärme, gemessen mittels des Testverfahrens gemäß ASTM D 648, im Bereich von 100°C bis 130°C gekennzeichnet ist.

2. Verfahren nach Anspruch 1, dadurch gekennzeichnet, daß zusätzlich, nach dem Einleiten von Chlor in den Reaktor bis zum Erreichen des angegebenen Drucks, das Poly(vinylchlorid) unter diesem Druck währen einer Zeitspanne von 1 min bis 45 min bei einer "einweichungs"-Temperatur im Bereich von 60°C bis 75°C eingeweicht wird.

3. Verfharen nach Anspruch 1, dadurch gekennzeichnet, daß das Poly(vinylchlorid)-Harz eine Porosität im Bereich von 0,1 cm³.g⁻¹ bis 0,7 cm³.g⁻¹, eine spezifische Oberfläche im Bereich von 0,7 m²/g bis 3,0 m²/g und eine logarithmische Viskositätszahl im Bereich von 0,5 bis 1,4 besitzt.

4. Verfahren nach Anspruch 1, dadurch gekennzeichnet, daß das Poly(vinylchlorid)-Harz suspensionspolymerisiert ist und eine Porosität im Bereich von 0,2 cm³.g⁻¹ bis 0,6 cm³.g⁻¹ und eine spezifische Oberfläche im Bereich von 1,0 m²/g bis 1,5 m²/g besitzt.

5. Verfahren nach Anspruch 1, dadurch gekennzeichnet, daß das Poly(vinylchlorid)-Harz in Masse polymerisiert ist und eine Porosität im Bereich von 0,1 cm³.g⁻¹ bis 0,4 cm³.g⁻¹ und eine spezifische Oberfläche im Bereich von 0,8 m²/g bis 1,0 m²/g besitzt.

6. Verfahren nach Anspruch 1, dadurch gekennzeichnet, daß das Einhalten der Endtemperatur dadurch bewirkt wird, daß man die Temperatur autogen von der Einweichungs-Temperatur auf die Endtemperatur ansteigen läßt.

7. Verfahren nach Anspruch 6, dadurch gekennzeichnet, daß die Endtemperatur im Bereich von 80°C bis 100°C liegt.

8. Verfahren nach Anspruch 1, dadurch gekennzeichnet, daß die Endtemperatur vom Beginn der Chlorierung bis zur erfolgten Bildung des chlorierten Poly(vinylchlorid)-Produkts im wesentlichen konstant gehalten wird.

9. Verahren nach Anspruch 8, dadurch gekennzeichnet, daß die Endtemperatur im Bereich von 80°C bis 100°C liegt.

10. Verfahren nach Anspruch 1, dadurch gekennzeichnet, daß die Endtemperatur vom Beginn der Photochlorierung im wesentlichen unmittelbar nach dem Einleiten von Chlor in den Reaktor bis zur Gewinnung des chlorierten Poly(vinylchlorid)-Produkts im wesentlichen konstant gehalten wird.

11. Verfahren nach Anspruch 10, dadurch gekennzeichnet, daß die Endtemperatur im Bereich von 80°C bis 100°C liegt.

**Revendications**

1. Procédé d'obtention de résine de poly(chlorure de vinyle)chloré ayant une masse volumique comprise dans la gamme de 1,50 à 1,65g.cm³ à 25°C dans une suspension aqueuse en utilisant Cl₂ comme agent de chloration qui consiste:

(a) à introduire dans un réacteur fonctionnant sous une pression élevée une suspension aqueuse d'un homopolymère macrogranulaire de chlorure de vinyl contenant de 15 à 35 % en poids de poly(chlorure de vinyle) et dépourvu de tout agent gonflant;

(b) à éliminer pratiquement tout l'oxygène de ladite suspension;

(c) à introduire du chlore dans le réacteur jusqu'à ce que la pression dans celui-ci soit comprise dans la gamme de 1,72 à 6,90 bars;

(d) à irradier le poly(chlorure de vinyle) avec de la lumière ultraviolette à un taux compris dans la gamme de 2W à 50W par 3,79 l de la suspension aqueuse;

(e) à maintenir une température de finition dans la gamme de plus de 60°C à 120°C pendant la chloration;

(f) à continuer à introduire du chlore dans le réacteur à mesure que la réaction se déroule si bien que la pression dans le réacteur est maintenue essentiellement constante dans ladite gamme de pression;

(g) à arrêter le courant de chlore dans le réactur lorsque suffisamment de chlore à èté ajouté pour obtenir une suspension de poly(chlorure de vinyle)chloré ayant ladite masse volumique à la fin de la réaction; et

(h) à séparer le poly(chlorure de vinyle)chloré macrogranulaire solide de la suspension de poly(chlorure de vinyle)chloré et à éliminer l'acide chlorhydrique présent dans ladite suspension de poly(chlorure de vinyle)chloré pour obtenir un produit de poly(chlorure de vinyle)chloré caractérisé par un température de déformation à la chaleur mesurée selon la norme ASTM Méthode D 648 qui est comprise dans la gamme de 100°C à 135°C.

2. Procédé selon la revendication 1 comprenant, en outre, après, l'introduction du chlore dans le réacteur jusqu'à ce que ladite pression soit atteinte, l'imbibition du poly(chlorure de vinyle) sous ladite pression pendant une durée d'une minute à 45 minutes à une température "d'imbibition" dans la gamme de 60°C à 75°C.

3. Procédé selon la revendication 1, caractérisé en ce que ladite résine de poly(chlorure de vinyle) a une porosité dans la gamme de 0,1 cm³.g⁻¹ à 0,7 cm³.g⁻¹, une étendue de surface dans la gamme de 0,7 m²/g à 3,0 m²/g et une viscosité intrinsèque dans la gamme de 0,5 à 1,4.

4. Procédé selon la revendication 1, caractérisé en ce que ladite résine de poly(chlorure de vinyle)est une suspension polymérisée, a une porosité dans la gamme de 0,2 cm³.g⁻¹ à 0,6 cm³.g⁻¹ et une étendue de surface dans la gamme de 1,0 m²/g à 1,5 m²/g.

5. Procédé selon la revendication 1, caractérise en ce que ladite résine de poly(chlorure de vinyle)est polymérisée en masse, a une porosité dans la gamme de 0,1 à 0,4 cm³.g⁻¹ et une étendue de surface dans la gamme de 0,8 m²/g à 1,0 m²/g.

6. Procédé selon la revendication 1, caractérisé en ce qu'on obtient le maintien de ladite température de finition en permettant une augmentation autogène de température de ladite température d'imbibition à ladite température de finition.

7. Procédé selon la revendication 6, caractérisé en ce que ladite température de finition est comprise dans la gamme de 80°C à 100°C.

8. Procédé selon la revendication 1, caractérisé en ce que ladite température de finition est maintenue essentiellement constant à partir de l'amorcage de la chloration jusqu'à ce que la photo-chloration procure ledit produit de poly-(chlorure de vinyle)chloré.

9. Procédé selon la revendication 8, caractérisé en ce que ladite température de finition est comprise dans la gamme de 80°C à 100°C.

10. Procédé selon la revendication 1, caractérisé en ce que ladite température de finition est maintenue essentiellement constante à partir de l'amorçage de la photochloration essentiellement immédiatement après l'introduction du chlore dans le réacteur jusqu'à l'obtention dudit produit de poly(chlorure de vinyle)chloré.

11. Procédé selon la revendication 10, caractérisé en ce que ladite température de finition est comprise dans la gamme de 80°C à 100°C.